Europäisches Patentamt

European Patent Office

Office européen des brevets

(19)

(11) EP 0 511 140 B1

(12) FASCICULE DE BREVET EUROPEEN

(45) Date de publication et mention
de la délivrance du brevet:
24.03.1999 Bulletin 1999/12

(51) Int Cl.⁶: **G06F 3/06**, G06K 7/00

(21) Numéro de dépôt: 92460012.5

(22) Date de dépôt: 22.04.1992

(54) **Système d'échange de données entre un objet électronique accouplé à un dispositif de transfert à débits de données distincts, objet insérable et dispositif de transfert correspondants**

Datenaustauschsystem zwischen einem elektronischen Objekt das zu einer Übertragungseinrichtung für unterschiedliche geschwindigkeiten angeschlossen ist und Einrichtung dafür

Data exchange system between an electronic object coupled to a variable data transfer device and such a transfer apparatus speed

(84) Etats contractants désignés:
AT BE CH DE DK ES GB GR IT LI LU MC NL PT SE

(30) Priorité: 25.04.1991 FR 9105369

(43) Date de publication de la demande:
28.10.1992 Bulletin 1992/44

(73) Titulaire: SMARTDISKETTE GmbH
D-65510 Idstein (DE)

(72) Inventeur: Grieu, François
F-75012 Paris (FR)

(74) Mandataire: Corlau, Vincent
c/o Cabinet Vidon,
Immeuble Germanium,
80 avenue des Buttes de Coesmes
35700 Rennes (FR)

(56) Documents cités:
EP-A- 0 373 411          US-A- 4 650 981
US-A- 4 924 171

## Description

Le domaine de l'invention est celui des systèmes d'échanges de données entre deux éléments susceptibles d'être accouplés.

Plus précisément, le système de l'invention trouve une application pour l'échange de données entre au moins un objet électronique insérable amovible et au moins un dispositif de transfert, dans lequel :

- ledit dispositif spécifique de transfert comporte des moyens de transfert de données dans et/ou hors de la mémoire de l'objet insérable,
- ledit objet insérable, ci-après également dénommé "objet insérable intelligent", comprend une mémoire électronique associée à un circuit d'accès, et des moyens d'accouplement accessibles de l'extérieur de l'objet insérable permettant d'accoupler temporairement, par un moyen quelconque, ledit objet insérable avec ledit dispositif de transfert.

Dans le sens utilisé en relation avec la présente invention, l'accouplement de l'objet insérable avec le dispositif de transfert peut s'effectuer non seulement par introduction physique, partielle ou totale, de l'objet insérable dans le dispositif de transfert, mais aussi par simple apposition de l'un contre l'autre, ou encore selon tout autre type d'arrangement physique permettant l'échange de données entre eux.

A titre d'exemple, le système de l'invention s'applique à l'échange de données entre un microordinateur et un élément électronique insérable dans le lecteur de disquette du microordinateur, ou dans un lecteur de carte à mémoire.

Cette situation correspond notamment à l'enseignement des documents de brevet antérieurs EP-A-0 373 411, US 4 701 601 et US 4 791 283.

Le document de brevet EP-A-0 373 411 publié le 20.06.90 concerne un artefact d'un élément du type d'une carte à bande magnétique, d'une disquette, ou d'une cassette insérable dans un équipement de traitement de données tel qu'un ordinateur ou un microordinateur. Selon ce document, l'élément insérable est équipé d'un processeur, d'une mémoire de données et/ou de programmes, et d'une interface émulant les moyens de communication d'un élément insérable classique avec l'équipement de traitement de données. Le processeur permet par exemple de réaliser des opérations de codage et/ou décodage, de cryptage et/ou décryptage, de signature de messages ou de contrôle d'accès, par exemple conditionnelles à l'usage d'un microordinateur. L'un des éléments critiques de ce type de système est l'alimentation électrique de l'interface de l'élément insérable. Selon ce document, la source d'énergie peut être constituée par une pile, ou encore un générateur activé par le mouvement d'insertion de l'élément insérable dans l'équipement de traitement de données.

Le document US 4 701 601 délivré le 20.10.1987 décrit le principe général d'une carte portable de transaction bancaire à microprocesseur comportant des moyens de traitement de données et des moyens d'émulation d'une bande magnétique pour pouvoir être compatible avec les terminaux bancaires de lecture de cartes à bande magnétiques. Ce brevet mentionne les problèmes de la mise à disposition d'une source d'énergie suffisante pour alimenter la carte, et notamment les moyens d'émulation d'une bande magnétique (col.5, l.64-67), et propose d'utiliser des panneaux solaires de recharge d'un accumulateur en minimisant les durées d'émulation (col.7, 11.31 à 54).

Le document de brevet US 4 791 283 délivré le 13.12.1988 est également relatif à une carte portable de transaction bancaire à microprocesseur comportant des moyens de traitement de données et des moyens d'émulation d'une bande magnétique. Il décrit plus précisément une configuration et une géométrie possibles de circuits pour réaliser des moyens d'engendrer un champ magnétique sur pratiquement toute la longueur d'une carte, permettant d'émuler chaque élément binaire (bit) d'information à transmettre. L'alimentation électrique des circuits est réalisée par une source d'énergie extérieure (col.4, 11.29-35).

Ces deux documents antérieurs se rapportent spécifiquement au domaine des cartes bancaires. Ils ne divulguent aucun moyen de configuration des données échangées entre la carte et le terminal de transaction, et ne résolvent pas de façon satisfaisante les problèmes d'alimentation de la carte à microprocesseur en énergie électrique.

Ces problèmes sont pourtant déterminants.

D'une manière générale, en effet, un objet portatif ou insérable tel qu'une disquette ou une carte à mémoire "intelligentes", c'est-à-dire munies d'au moins une mémoire électronique associée à des circuits d'accès, se caractérise par son autonomie d'une part, et par sa capacité de traitement d'autre part.

Concernant le traitement des données échangées, l'un des problèmes qui se pose est la compatibilité des débits de données entre les moyens de traitement du dispositif de transfert, les moyens d'accouplements, et les circuits d'accès à la mémoire électronique de l'objet insérable. Plus précisément, dans le cas notamment des moyens d'accouplement magnétique tels que ceux utilisés par l'échange de données entre une disquette et le lecteur de disquette d'un microordinateur, le débit est normalisé, à une valeur de typiquement 250 à 500 Kbits par seconde.

Recevoir ou émettre des données à ces débits exige de la part des circuits d'accès à la mémoire électronique de l'objet insérable une capacité de traitement correspondante. Par circuits d'accès à la mémoire, on entend ici, ainsi que par la suite, tout moyen susceptible de gérer l'accès à ladite mémoire, y compris un microprocesseur, ou un microcontrôleur (microprocesseur incorporant des éléments d'interface tels qu'une UART (sérialisateur/désérialisateur asynchrone) et/ou de la mémoire propre).

Or, cette exigence est difficilement soluble, en l'état actuel de la technique, dans des conditions techniquement et commercialement acceptables.

Il existe certes des processeurs compacts susceptibles d'être montés dans un élément plat tel qu'une disquette ou une carte à mémoire, et capables de gérer des données à ces débits. Mais ces processeurs consomment une quantité d'énergie excédant la capacité des piles compactes les plus performantes actuellement disponibles à coût raisonnable (par exemple des piles Li-Mg), pour une durée d'utilisation recherchée satisfaisante.

D'autre part, il existe bien des microprocesseurs plus économiques en énergie consommée, mais leurs performances sont insuffisantes pour traiter les débits des données considérées.

Enfin, on pourrait envisager une configuration de microprocesseur spécifique adapté à ces contraintes, mais le coût de l'étude de conception de tels composants, et la faible taille relative du marché envisagé pour ces microprocesseurs spécifiques rendent cette solution a priori non rentable.

En outre, les moyens d'accouplement magnétiques utilisés dans les lecteurs de disquettes de micro-ordinateurs comprennent généralement des moyens d'encodage spécifique des données avec lesquels il est nécessaire d'être compatible. Ainsi, les micro-ordinateurs du type commercialisé par la société IBM utilisent-ils un codage appelé MFM (Modified Frequency Modulation), et ceux utilisés par la société Apple utilisent un codage appelé GCR (Group Coded Recording). Les codage MFM, GCR, ou équivalents ont essentiellement pour but d'encoder les informations sous une forme adaptée aux contraintes de la transmission magnétique, et tout système d'échange de données dans ce contexte doit tenir compte de ces contraintes.

Le document US-4 924 171 décrit un autre système permettant de transmettre des données et un signal d'alimentation à un module mémoire, par couplage électromagnétique. Les données sont transmises par un signal à la fréquence f1 pour un bit égal à 1 et par un signal de fréquence f2 pour un bit égal à 0.

L'invention a pour objectif de résoudre ces différents problèmes.

Plus précisément, l'objectif de l'invention est de fournir un système d'échange de données entre un objet insérable intelligent et un dispositif de transfert, ce système rendant possible l'utilisation, dans l'objet insérable, de composants travaillant à plus faible débit que les moyens d'accouplement à travers lesquels ledit objet insérable communique avec ledit dispositif de transfert.

Un autre objectif de l'invention, adapté à un de ses modes de réalisation préférentiels est de permettre la réalisation de disquettes compactes intelligentes, compatibles avec les lecteurs magnétiques de disquettes standardisés équipant notamment les microordinateurs, en utilisant des composants électroniques courants et consommant peu d'énergie, et malgré la faible capacité de ce type de composants à traiter des débits de données élevés.

Ces objectifs, ainsi que d'autres qui apparaîtront par la suite sont atteints, selon l'invention, à l'aide d'un système d'échange de données selon la revendication 1, d'un objet insérable selon la revendication 12 et d'un dispositif de transfert selon la revendication 13.

De cette façon, non seulement on rend possible l'échange de données entre le dispositif de transfert et l'objet insérable, mais encore on peut reporter une partie substantielle de la capacité de traitement d'adaptation dans le dispositif de transfert, comme on le verra plus loin, ce qui permet d'économiser la capacité de traitement de l'objet insérable.

Avantageusement, lesdits moyens pour insérer de l'information de bourrage comprennent des moyens de codage redondant et/ou de réplication n fois (n ≥ 2) d'au moins certaines desdites données utiles, dans le flux de données entrant et/ou sortant du dispositif de transfert.

Préférentiellement, dans la voie pour l'échange de données dans le sens allant dudit dispositif de transfert vers ledit objet insérable, lesdits moyens de réplication d'au moins certaines des données utiles coopèrent avec des moyens d'encodage spécifique de type MFM, GCR ou équivalent, disposés en aval desdits moyens de réplication, lesdits moyens de réplication et d'encodage MFM ou équivalent, étant situés dans le dispositif de transfert.

Dans ce cas, d'une manière avantageuse, la combinaison des traitements de données par les moyens de réplication puis les moyens de codage MFM ou équivalent fournit, pour chaque bit d'information utile, une séquence de données au sein de laquelle alternent des séries de uns et de zéros selon un premier motif pour un bit utile égal à zéro, et selon un second motif pour un bit utile égal à un, et ledit objet insérable comprend de moyens de discrimination de motif assurant la discrimination entre le premier et le second motifs de façon à récupérer chacun des bits utiles successifs dans le flux de données entrant dans ledit objet insérable.

On peut avantageusement choisir une méthode d'introduction des éléments de bourrage conduisant, après l'encodage MFM, GCR ou équivalent par le dispositif de transfert, à des motifs périodiques prédéterminés présentant des changements d'état selon une première périodicité pour le premier motif, et selon une seconde périodicité différente de la première périodicité pour le second motif. De cette manière la reconnaissance des motifs peut se réduire à une simple discrimination de fréquence.

Pour simplifier la chaîne de traitement dans l'objet insérable, lesdits moyens de discrimination de fréquence peuvent ainsi alimenter directement le convertisseur série vers parallèle associé à un processeur situé dans ledit objet insérable, synchronisé à la fréquence de changement de motif périodique dans le flux de données entrant dans ledit objet insérable.

Selon une autre caractéristique avantageuse, lesdites données utiles sont regroupées en trains de données comportant des délimiteurs, avant les traitements par lesdits moyens de réplication et d'encodage MFM ou équivalent, et lesdits délimiteurs assurent le calage de synchronisation des circuits d'accès à la mémoire de l'objet insérable. Ainsi, dans le cas avantageux où les circuits d'accès à la mémoire comprennent un microprocesseur accessible à travers un désérialisateur, c'est ce dernier qui se synchronise sur les délimiteurs; ceci permet d'éviter le recours à des moyens, généralement coûteux en énergie, pour synchroniser l'horloge du processeur de l'objet insérable sur les données reçues du dispositif de transfert, tel qu'une boucle à verrouillage de phase ou équivalent.

Préférentiellement, dans la voie pour l'échange de données dans le sens allant dudit objet insérable vers ledit dispositif de transfert, lesdits moyens pour insérer des données de bourrage comprennent des moyens de mémorisation de séquences de bits pré-élaborées, et des moyens de transmission desdites séquences pré-élaborées en fonction de données utiles à transmettre. Lesdites séquences de bits pré-élaborées sont par exemple obtenues à partir de traitements de réplication, d'encodage MFM ou équivalent, et/ou d'encodage CRC.

Préférentiellement, les données utiles sont fournies octet par octet, et lesdits moyens pour insérer des données de bourrage insèrent une séquence de bourrage au moment de chaque lecture d'un nouvel octet de données utiles dans la mémoire électronique dudit objet insérable.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :

-   la figure 1 schématise les principaux modules fonctionnels intervenant dans la chaîne de traitement du système d'échange de données de l'invention,
-   la figure 2 illustre un mode de réalisation préférentiel du système de la figure 1, à l'aide de composants disponibles,
-   la figure 3 illustre les traitements successifs appliqués à des données utiles à émettre ($C5), au long de la chaîne de traitement dans la voie de transmission depuis le dispositif de transfert vers le processeur du mode de réalisation de la figure 2.

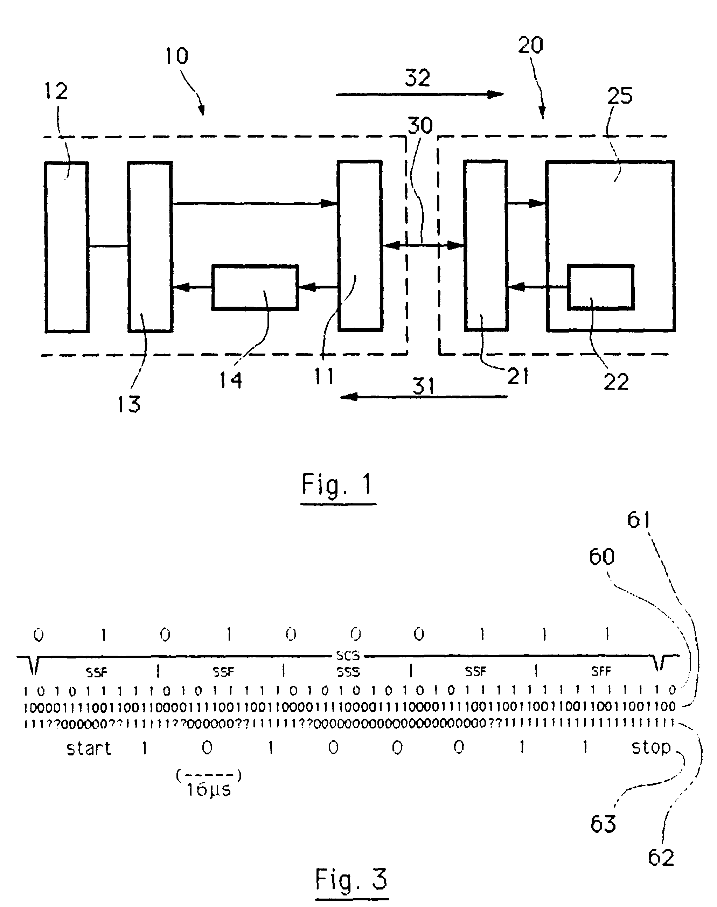

La figure 1 fait apparaître les principaux modules fonctionnels intervenant dans le système des échanges de données de l'invention.

Dans le schéma de la figure 1, on a représenté la mise en communication d'un objet insérable 10 avec un dispositif de transfert 20. L'objet 10 et le dispositif 20 communiquent à travers leurs moyens d'accouplement 11, 21. Ces moyens d'accouplement sont des moyens d'accouplement magnétiques, mais l'invention est également transposable et d'autres types de moyens d'accouplement, par exemple électromagnétiques, optiques, capacitifs, etc...

Le dispositif de transfert 20 correspond, dans l'exemple discuté ci-après, au lecteur de disquette standardisé d'un microordinateur, et l'objet insérable 10 est une disquette "intelligente", c'est-à-dire munie d'une mémoire électronique 12 associée à un circuit d'accès 13, et comportant des moyens d'accouplement 11 émulant une disquette classique vis à vis du lecteur de disquette 20.

L'invention permet de satisfaire à une double contrainte :

-   assurer le débit standard prescrit pour le flux de données 30 échangé avec le lecteur de disquette (typiquement 250 à 500 Kbits par seconde) ;
-   utiliser des moyens de traitement de données dans la disquette intelligente 10 possédant une capacité de traitement limitée, et notamment n'étant en mesure que de traiter un débit de données inférieur à celui du flux de données 30, du fait des limitations du circuit 13.

Les moyens d'accouplement 11, 21 s'échangent à un flux de données 30, présentant un débit apparent égal au débit standard.

Selon l'invention, le débit apparent du flux de données 30 (qui correspond au débit réel, c'est-à-dire au nombre de bits par seconde réellement échangés), est supérieur au débit des données utiles dans le flux de données 30. Ceci résulte du fait que les données utiles ont subi un traitement préalable par lequel on a adjoint à l'information utile de l'information de bourrage (par exemple de l'information redondante, surabondante, ou non signifiante), pour former le flux de données 30.

Ainsi, dans la voie pour l'échange de données dans le sens 31 allant du lecteur de disquette 20 vers la disquette intelligente 10, le lecteur de disquette comporte un module 22 comprenant des moyens pour insérer de l'information de bourrage dans le flux de données 30 sortant du lecteur de disquette 20.

Le flux de données 30 entrant dans la disquette intelligente 10 doit ensuite être traité dans le module 14, afin d'en extraire les données utiles qui seront exploitées par l'ensemble formé par la mémoire électronique 12 et ses circuits d'accès 13.

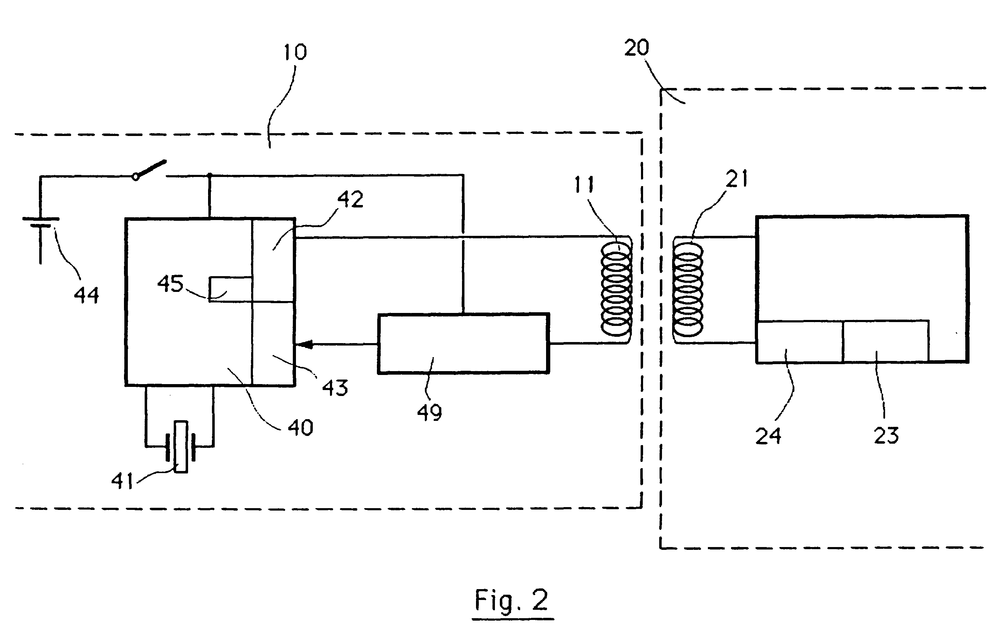

La figure 2 illustre un mode de réalisation préférentiel concret du schéma fonctionnel de la figure 1.

La disquette intelligente 10 est construite autour d'un processeur 40, par exemple de la famille 68HC05 commercialisé par MOTOROLA, par exemple le 68HC05C4 ou encore le 68HC05A6.

Le processeur M68HC05A6 est un processeur 8 bits, présentant les ressources suivantes :

- 4 Koctets de ROM
- 176 octets de RAM
- 2 Koctets d'EEPROM
- 1 circuit d'horloge activé par un cristal extérieur 41
- 1 convertisseur parallèle vers série 42
- 1 convertisseur asynchrone série vers parallèle 43.

En utilisant un cristal 41 à 2 MHz, la consommation du processeur 40 doit être de l'ordre de 3 milliampères sous 3 volts. A cette fréquence, on atteint environ 56 % de la vitesse de traitement d'une carte à puce actuelle équipée d'un microprocesseur MOTOROLA. Ces performances sont suffisantes pour réaliser par exemple des algorithmes de cryptographie du type DES, ou encore de gestion de clés, dans des applications de contrôle d'accès logique. D'autres types d'algorithmes, actuels ou futurs, et d'autres types d'applications sont bien entendu compatibles.

L'alimentation électrique peut par exemple être fournie par une pile 44. Avantageusement, on peut utiliser une pile lithium-manganèse du type 20-25 (h=2,5mm; $\phi$=20mm; 3,0V; 140mA.h) ou du type 24-30 (h=3,0mm; $\phi$=24,5mm; 3,0V ; 270mA.h).

Une cellule unique 20-25 à 140 milliampères.heure présente une autonomie de 35 heures sous un courant de 4 milliampères. Ceci représente 1 an de fonctionnement à 5 minutes par jour.

La disquette intelligente 10 comporte d'autre part des moyens d'accouplement magnétiques 11, qui peuvent par exemple être constitués d'une simple bobine, ou encore des dispositifs plus sophistiqués tels que celui décrit dans le document de brevet US 4 791 283 discuté précédemment, ou encore tout autre dispositif adéquat.

Entre le microprocesseur 40 et le coupleur 11 figure un module de discrimination de fréquence 49 dans la voie d'échange de données depuis le lecteur 20 en direction de la disquette 10.

Dans la voie d'échange lecteur 20-disquette 10, les données utiles élaborées par les moyens de traitement 25 du lecteur subissent un double traitement en cascade :

- un premier traitement 23 de codage par redondance et/ou par réplication, par lequel chaque bit 0 ou 1 de données utiles est codé sur n bits (n $\geq$ 2);
- un codage 24 adapté à la transmission par couplage magnétique, du type d'un codage MFM (en anglais ; Modified Frequency Modulation), ou autre.

Grâce à ce codage en cascade, le débit de données transmis aux coupleurs magnétiques 21, 11 peut atteindre les valeurs standards prescrites (par exemple 500 Kbits par seconde) à partir de données utiles d'un débit 2n fois inférieur.

Tout autre codage aboutissant au même résultat peut également être mis en oeuvre. Toutefois, le codage préconisé ici semble actuellement optimal pour les raisons suivantes :

- le codage MFM 24 (ou équivalent) typique d'une transmission par couplage magnétique, permet d'optimiser la transmission d'informations du coupleur 21 au coupleur 11 ;
- le codage de redondance 23 augmente le débit apparent de données (doublé en outre ensuite par le codage MFM 24), par rapport au débit de données utiles ;
- le codage 23 peut enfin être choisi de façon à simplifier le décodage réalisé dans la disquette intelligente 10.

Un exemple de mise en oeuvre compatible avec ces différents objectifs est illustré en figure 3.

La figure 3 illustre les différentes étapes de codage réalisées dans la voie d'échange de données 31 allant du lecteur de disquette 20 à la disquette intelligente 10.

L'exemple pris correspond à la transmission des données utiles $C5, qui est la représentation hexadécimale de l'octet suivant :

11000101

La première étape consiste à encadrer cet octet par des délimiteurs, après avoir retourné l'octet de façon à placer le bit de plus faible poids en tête :

$$0 \quad 1 \quad 0 \quad 1 \quad 0 \quad 0 \quad 0 \quad 1 \quad 1 \quad 1$$

Start　　　　　　　　Stop

Le codage redondant réalisé dans le module 23 est effectué selon la règle suivante :

- chaque bit égal à 0 est codé sous la forme 0101
- chaque bit égal à 1 est codé sous la forme 1111.

En conséquence, l'octet $C5 entre ses deux délimiteurs START (0) et STOP (1) est codé sous la forme de cinq octet successifs $5F $5F $55 $5F $FF, comme représenté en ligne 60 de la figure 3.

Le débit de données est donc, dans ce cas, multiplié par 5 après mise en oeuvre de ce codage 23.

Le train de données 60 obtenu est ensuite soumis au codage MFM du module 24.

Le codage MFM est un codage standardisé de type connu, utilisé notamment pour accéder à des disquettes de 720 K. Il est réalisé selon les règles suivantes :

- chaque bit de données est codé sous la forme de deux bits MFM, toutes les transitions étant synchronisées sur une horloge à 500 KHz,
- chaque bit de données à 1 est codé sous la forme ST (S = Steady : identique au bit précédent ; T = Transition : inverse du bit précédent) ;
- chaque bit de données à 0 est codé sous la forme SS si la donnée précédente est 1, ou TS si la donnée précédente est 0.

En application de ces règles, les transitions dans le train de données se produisent à des intervalles de 4, 6 ou 8 µS.

Il en résulte que les séquences continues de type 11111111 sont codées sous la forme de transition toutes les 4 µS (ondes carrées à 125 KHz ), et les séquences de 01010101 sont codées sous la forme de transistion toutes les 8 µS (62,5 KHz).

La ligne 61 de la figure 3 représente le signal obtenu en sortie du module 24 de codage MFM à partir des données utiles $C5.

Le codage MFM est réalisé dans le circuit contrôleur de disquette des microordinateurs standards.

La combinaison des codages réalisés par les modules 23 et 24 permet de simplifier élégamment la restitution des données utiles dans la disquette 10, à l'aide d'un simple circuit 49 discriminateur de fréquence.

Plus précisément, après le codage en cascade, chaque bit de données utiles est codé sous la forme d'un signal carré de fréquence différente, suivant qu'il correspond à un 1 ou à un 0. Le discriminateur de fréquence 49 a donc pour fonction de détecter la fréquence instantanée du signal 61, et fournit en sortie un signal 62 qui est au niveau bas lorsqu'une fréquence de 62,5 KHz est détectée (bit utile d'origine = 0), et est au niveau haut lorsqu'une fréquence de 125 KHz est détectée (bit utile d'origine à 1).

En sortie du discriminateur de fréquence 49, les données utiles 63 sont donc directement fournies au désérialisateur 43 du microprocesseur 40 de la disquette intelligente 10. Ce désérialisateur 43 correspond à la moitié réceptrice du convertisseur série asynchrone vers parallèle du microprocesseur (en anglais UART : Universal Asynchronous Receiver Transmitter), et reçoit les données entre délimiteurs START/STOP (éléments binaires de départ et d'arrêt), de manière que les données soient assemblées en octets et fournies sous une forme directement utilisable par le microprocesseur 40.

L'élaboration des données échangées dans le sens 32 (depuis la disquette 10 vers le lecteur de disquette 20) peut être réalisée en utilisant un convertisseur parallèle vers série 42, interne ou externe au microprocesseur 40, en coopération avec une zone 45 de mémorisation de séquence pré-élaborée.

De façon à être conformes au standard de communication des lecteurs de disquette, les données envoyées vers le lecteur 20 doivent être constituées de repères d'adresse (ID Address Marks), de repères de données (Data Address Marks), des données proprement dites, et enfin d'un mot de contrôle de type CRC (Cyclic Redundancy Check : contrôle cyclique par redondance).

Du fait de la faible vitesse relative de traitement du processeur 40, il pourra être nécessaire d'augmenter le débit apparent des données, par rapport au débit de données utiles produites par le processeur 40, afin de respecter les débits de transmission des coupleurs magnétiques 11, 21. Dans le but d'économiser la capacité de traitement du processeur, le codage des données utiles produites par le processeur 40 n'aura pas lieu en temps réel, mais consiste à envoyer des séquences précalculées pour chaque bit de données utiles fourni.

Plus précisément, la procédure d'émission présente les étapes suivantes :

- regroupement des octets de données utiles, à titre d'illustration par 8 (64 bits en tout),
- précalcul du CRC, et de son codage en MFM,
- utilisation d'une boucle de programme du type représenté en Table 1 (RomTxLoop), pour envoyer les repères d'adresses et de données. Ces marqueurs peuvent être précalaculés, codés en MFM, et mémorisés dans la zone de mémoire 45, en respectant toutes les violations d'horloge attendues par les circuits de contrôle du lecteur 20 ;
- utilisation d'une boucle de programme tel que représenté en Table 2 (EncodLoop),pour envoyer la séquence précalculée, codée en MFM et mémorisée en 45 correspondant à chacun des bits utiles de chacun des huit octets. Le codage des bits utiles peut par exemple être proche de celui réalisé dans les modules 23, 24 ;
- émission du CRC précalculé, codé MFM, et mémorisé dans la zone 45.

Les Tables I et II représentent des pas de programme exprimés dans le langage de programmation du microprocesseur 68HC05 MOTOROLA.

Ces pas de programme sont donnés à titre indicatif, et sont exploitables directement par l'homme du métier.

Les instructions de type "passer n cycles", sont introduites pour ajuster la cadence d'émission des données au rythme de fonctionnement du convertisseur parallèle vers série 43.

En table II, pour chaque bit de données utiles égal à 1, le motif envoyé est 00110011 ; pour chaque bit égal à 0, le motif envoyé est 00001111.

Dans ce mode de réalisation, le codage des données utiles est donc identique pour l'un et l'autre des sens de transmission.

Toutefois, l'invention couvre également les modes de réalisation où les codages seraient distincts. A titre d'exemple, il est possible de coder chaque bit utile sur des séquences plus longues, notamment pour faciliter la détection réalisée par le circuit 49 discriminateur de fréquences dans le sens 31 de transmission.

## TABLE 1

```
1              LDX    #8-1          ;    nombre d'octets à émettre, moins 1
2 RomTxLoop    LDA    $20,X         ;4   aller chercher l'octet suivant dans la ROM
3              STA    SERTOPAR      ;4   envoi dans le sérialisateur 42
4              NOP                  ;2   passer 2 cycles
5              DECX                 ;3   parcours de la table et test de fin
6              BPL    RomTxLoop     ;3   reboucler
```

## TABLE 2

```
1               LDX     #8              ;       nombre d'octets à émettre
2               BRA     EncodStart
3 EncodLoop     LDA     #%00001111      ;2      émettre un motif de bourrage pour 0101 (start)
4               STA     SERTOPAR        ;4      envoi dans le sérialisateur 42
                ; (codage du bit 0)
5               NOP                     ;2      passer 2 cycles
6               BRSET 0,TMP,IST0        ;5      test bit 0 de TMP
7               LDA     #%00001111      ;2      si 0 envoi du motif pour 0101
8               BRA     GST0            ;3
9 IST0          TSTA                    ;3      passer 3 cycles
10              LDA     #%00110011      ;2      si 1 envoi du motif pour 1111
11 GST0         STA     SERTOPAR        ;4      envoi dans le sérialisateur 42
                ;
12; (codages des bits 1,2,3,4,5 et 6 non représenté)
                ; (codage du bit 7)
13              NOP                     ;2      passer 2 cycles
14              BRSET 7,TMP,IST7        ;5      test bit 7 de TMP
15              LDA     #%00001111      ;2      si 0, envoi du motif pour 0101
16              BRA     GST7            ;3
17 IST7         TSTA                    ;3      passer 3 cycles
18 EncodStart   LDA     #%00110011      ;3      si 1 envoi du motif pour 1111
19 GST7         STA     SERTOPAR        ;4      envoi dans le sérialisateur 42
                ;
20              NOP     NOP             ;4      passer 4 cycles
21              LDA     $80-1,X         ;4      aller chercher l'octet suivant dans la RAM
22              STA     TMP             ;2      stockage dans TMP
23              LDA     #%00110011      ;2      émettre un motif de bourrage pour 1111 (stop)
24              STA     SERTOPAR        ;4      envoi dans le sérialisateur 42
                ;
25              NOP     NOP             ;4      passer 4 cycles
26              DECX                    ;3      parcours de la table & test de fin
27              BPL     EncodLoop       ;3      reboucler
```

**Revendications**

1. Système d'échange de données comprenant au moins un objet électronique insérable amovible et au moins un dispositif de transfert,

   - ledit objet insérable comprenant une mémoire électronique associée à un circuit d'accès et des moyens d'accouplement permettant d'accoupler temporairement ledit objet insérable avec ledit dispositif de transfert,
   - ledit dispositif de transfert comportant des moyens de transfert de données dans et/ou hors de la mémoire de l'objet insérable,
   - ledit objet insérable émulant un support d'enregistrement magnétique vis à vis d'une tête de lecture et/ou écriture magnétique du dispositif de transfert, le débit d'échange de données du dispositif de transfert étant supérieur à celui du circuit d'accès de la mémoire de l'objet insérable,

   système caractérisé en ce qu'il comporte des moyens (22, 40) pour limiter le débit de données utiles dans le débit de données apparent (30) entrant et/ou sortant du dispositif de transfert (20), de manière qu'il soit compatible avec le débit sortant et/ou entrant du circuit d'accès (13) de la mémoire (12) de l'objet insérable (10), lesdits moyens pour limiter le débit de données utiles comprenant des moyens pour insérer de l'information de bourrage dans le flux de données (30) entrant et/ou sortant du dispositif de transfert (20).

**2.** Système selon la revendication 1 caractérisé en ce que lesdits moyens pour insérer de l'information de bourrage comprennent des moyens (23) de codage redondant et/ou de réplication n fois, n ≥ 2, d'au moins certaines desdites données utiles, dans le flux de données (30) entrant et/ou sortant du dispositif de transfert (20).

**3.** Système selon la revendication 2 caractérisé en ce que, dans la voie pour l'échange de données dans le sens (31) allant dudit dispositif de transfert (20) vers ledit objet insérable (10), lesdits moyens de réplication (23) d'au moins certaines des données utiles coopèrent avec des moyens d'encodage spécifique (24) de type MFM ou GCR, disposés en aval desdits moyens de réplication (23), lesdits moyens (23,24) de réplication et d'encodage MFM ou GCR étant situés dans le dispositif de transfert (20).

**4.** Système selon la revendication 3, dans lequel la combinaison des traitements de données par les moyens de réplication (23) puis les moyens de codage MFM ou GCR (24) fournit, pour chaque bit d'information utile, une séquence de données au sein de laquelle alternent des séries de uns et de zéros selon un premier motif (51) pour un bit utile égal à zéro, et selon un second motif (52) pour un bit utile égal à un, caractérisé en ce que ledit objet insérable comprend des moyens de discrimination de motif (49) assurant la discrimination entre les premiers (51) et les seconds (52) motifs de façon à récupérer chacun des bits utiles successifs dans le flux de données (30) entrant dans ledit objet insérable.

**5.** Système selon la revendication 4, caractérisé en ce que lesdits premiers et seconds motifs sont des motifs périodiques prédéterminés présentant des changements d'état selon une première périodicité pour le premier motif, et selon une seconde périodicité différente de la première périodicité pour le second motif, et en ce que lesdits moyens de discrimination de motif sont constitués par des moyens de discrimination de fréquence (49).

**6.** Système selon la revendication 5 caractérisé en ce que lesdits moyens de discrimination de fréquence alimentent directement un convertisseur série vers parallèle (43) associé à un processeur (40) situé dans ledit objet insérable (10), synchronisé à la fréquence de changement de motif périodique dans le flux de données entrant dans ledit objet insérable (10).

**7.** Système selon la revendication 6 caractérisé en ce que lesdites données utiles sont regroupées en trains de données comportant des délimiteurs (START, STOP), avant les traitements par lesdits moyens (23,24) de réplication et d'encodage MFM ou GCR, et en ce que lesdits délimiteurs assurent le calage de synchronisation desdits circuits d'accès (13, 43) à la mémoire (12) de l'objet insérable.

**8.** Système selon l'une quelconque des revendications 1 à 7 caractérisé en ce que, dans la voie pour l'échange de données dans le sens (32) allant dudit objet insérable (10) vers ledit dispositif de transfert (20), lesdits moyens pour insérer des données de bourrage comprennent des moyens (45) de mémorisation de séquences de bits pré-élaborées, et des moyens (42) de transmission desdites séquences pré-élaborées en fonction de données utiles à transmettre.

**9.** Système selon la revendication 8 caractérisé en ce que lesdites séquences de bits pré-élaborées sont obtenues à partir de traitements de réplication, d'encodage MFM et/ou d'encodage GCR.

**10.** Système selon l'une quelconque des revendications 8 et 9 caractérisé en ce que les données utiles sont fournies octet par octet, et en ce que lesdits moyens pour insérer des données de bourrage insèrent une séquence de bourrage au moment de chaque lecture d'un nouvel octet de données utiles dans la mémoire électronique dudit objet insérable (10).

**11.** Système d'échange de données comprenant au moins un objet électronique insérable amovible et au moins un dispositif de transfert,

- ledit objet insérable comprenant une mémoire électronique associée à un circuit d'accès et des moyens d'accouplement permettant d'accoupler temporairement ledit objet insérable avec ledit dispositif de transfert,
- ledit dispositif de transfert comportant des moyens de transfert de données dans et/ou hors de la mémoire de l'objet insérable,
- ledit objet insérable émulant un support d'enregistrement électromagnétique, optique, et/ou capacitif vis à vis d'une tête de lecture et/ou écriture électromagnétique, optique, et/ou capacitive du dispositif de transfert, le débit d'échange de données du dispositif de transfert étant supérieur à celui du circuit d'accès de la mémoire de l'objet insérable,

système caractérisé en ce qu'il comporte des moyens (22, 40) pour limiter le débit de données utiles dans le débit de données apparent (30) entrant et/ou sortant du dispositif de transfert (20), de manière qu'il soit compatible avec le débit sortant et/ou entrant du circuit d'accès (13) de la mémoire (12) de l'objet insérable (10), lesdits moyens pour limiter le débit de données utiles comprenant des moyens pour insérer de l'information de bourrage dans le flux de données (30) entrant et/ou sortant du dispositif de transfert (20).

**12.** Objet insérable utilisable avec au moins un dispositif de transfert,

- ledit objet insérable comprenant une mémoire électronique associée à un circuit d'accès et des moyens d'accouplement permettant d'accoupler temporairement ledit objet insérable avec ledit dispositif de transfert,
- ledit dispositif de transfert comportant des moyens de transfert de données dans et/ou hors de la mémoire de l'objet insérable,
- ledit objet insérable émulant un support d'enregistrement magnétique vis à vis d'une tête de lecture et/ou écriture magnétique du dispositif de transfert, le débit d'échange de données du dispositif de transfert étant supérieur à celui du circuit d'accès de la mémoire de l'objet insérable,

caractérisé en ce qu'il comporte des moyens (40) pour limiter le débit de données utiles dans le débit de données apparent (32) sortant de l'objet insérable (10), de manière qu'il soit compatible avec le débit sortant du circuit d'accès (13) de la mémoire (12) de l'objet insérable (10), lesdits moyens pour limiter le débit de données utiles comprenant des moyens pour insérer de l'information de bourrage dans le flux de données (32) sortant de l'objet insérable (10).

**13.** Dispositif de transfert utilisable avec au moins un objet électronique insérable amovible,

- ledit objet insérable comprenant une mémoire électronique associée à un circuit d'accès et des moyens d'accouplement permettant d'accoupler temporairement ledit objet insérable avec ledit dispositif de transfert,
- ledit dispositif de transfert comportant des moyens de transfert de données dans et/ou hors de la mémoire de l'objet insérable,
- ledit objet insérable émulant un support d'enregistrement magnétique vis à vis d'une tête de lecture et/ou écriture magnétique du dispositif de transfert, le débit d'échange de données du dispositif de transfert étant supérieur à celui du circuit d'accès de la mémoire de l'objet insérable,

caractérisé en ce qu'il comporte des moyens (22) pour limiter le débit de données utiles dans le débit de données apparent (31) sortant du dispositif de transfert (20), de manière qu'il soit compatible avec le débit entrant du circuit d'accès (13) de la mémoire (12) de l'objet insérable (10), lesdits moyens pour limiter le débit de données utiles comprenant des moyens pour insérer de l'information de bourrage dans le flux de données (31) sortant du dispositif de transfert (20).

**Patentansprüche**

**1.** Datenaustauschsystem, das mindestens einen elektronischen Gegenstand, der eingefügt bzw. entfernt werden kann, und mindestens eine Übertragungsvorrichtung umfaßt, wobei

- der einfügbare Gegenstand über einen elektronischen Datenspeicher verfügt, der mit einer Zugangsschaltung verbunden ist, sowie Kopplungsmittel enthält, die ein vorübergehendes Koppeln des einfügbaren Gegenstandes mit der Übertragungsvorrichtung ermöglichen,
- die Übertragungsvorrichtung über Mittel zur Datenübertragung in und/oder aus dem Datenspeicher des einfügbaren Gegenstandes verfügt,
- der einfügbare Gegenstand eine magnetische Aufzeichnungsunterstützung gegenüber einem magnetischen Lese- und/oder Schreibkopf der Übertragungsvorrichtung emuliert, wobei die Datenaustauschrate der Übertragungsvorrichtung höher ist, als die der Zugangsschaltung des Datenspeichers des einfügbaren Gegenstandes;

das System ist dadurch gekennzeichnet, daß es über Mittel (22, 40) verfügt, um den Durchsatz nützlicher Daten innerhalb des scheinbaren Durchsatzes von Daten (30) zu begrenzen, welche in die Übertragungsvorrichtung (20) eintreten und/oder diese verlassen, so daß dieser Datendurchsatz mit dem in bzw. aus der Zugangsschaltung (13) zum Datenspeicher (12) des einfügbaren Gegenstandes (10) ein und/oder austretenden Datendurchsatz kompatibel ist, wobei die Mittel zum Begrenzen des Durchsatzes nützlicher Daten über Mittel verfügen, um Füllinformation in den Datenfluß (30) einzufügen, der in die Übertragungsvorrichtung (20) eintritt und/oder diese verläßt.

2. System gemäß Anspruch 1,
dadurch gekennzeichnet, daß die Mittel zum Einfügen der Füllinformation über redundante und/oder n-fach (n ≥ 2) reproduzierende Kodierungsmittel (23) verfügen, für wenigstens einige der nützlichen Daten innerhalb des Datenstroms (30), welcher in die Übertragungsvorrichtung (20) eintritt und/oder diese verläßt.

3. System gemäß Anspruch 2,
dadurch gekennzeichnet, daß in dem Datenaustauschweg in Richtung (31), die von der Übertragungsvorrichtung (20) zum einfügbaren Gegenstand (10) verläuft, die Reproduktionsmittel (23) für mindestens einige der nützlichen Daten mit spezifischen Kodierungsmitteln (24) vom Typ MFM oder GCR zusammenwirken, die sich hinter den Reproduktionsmitteln (23) befinden, wobei die Mittel (23, 24) zur Reproduktion und zum MFM- oder GCR-Kodieren innerhalb der Übertragungsvorrichtung (20) untergebracht sind.

4. System gemäß Anspruch 3,
bei dem die Kombination der Datenverarbeitungen durch die Reproduktionsmittel (23) und dann durch die Mittel zur MFM- oder GCR-Kodierung (24) für jedes Bit nützlicher Information eine Datenfolge liefert, innerhalb derer abwechselnd Reihen von Einsen und Nullen vorhanden sind, gemäß einem ersten Muster (51) für ein nützliches Bit, das gleich Null ist und gemäß eine zweiten Muster (52) für ein nützliches Bit, das gleich Eins ist,
dadurch gekennzeichnet, daß der einfügbare Gegenstand über Mittel zum Unterscheiden von Mustern (49) verfügt, welche das Unterscheiden zwischen den ersten Mustern (51) und den zweiten Mustern (52) ermöglichen, so daß jedes der aufeinanderfolgenden nützlichen Bits aus dem in den einfügbaren Gegenstand eintretenden Datenfluß (30) wiedergewonnen werden können.

5. System gemäß Anspruch 4,
dadurch gekennzeichnet, daß es sich bei dem ersten und zweiten Muster um periodisch im voraus festgelegte Muster handelt, welche Zustandsänderungen gemäß einer ersten Periodizität für das erste Muster und einer zweiten, von der ersten Periodizität verschiedenen Periodizität für das zweite Muster, aufweisen und dadurch, daß die Mittel zum Unterscheiden der Muster aus Mitteln zum Unterscheiden von Frequenzen (49) bestehen.

6. System gemäß Anspruch 5,
dadurch gekennzeichnet, daß die Mittel zum Unterscheiden der Frequenzen einen Seriell-zu-Parallel-Wandler (43) direkt versorgen, der mit einem Prozessor (40) verbunden ist, welcher sich im einfügbaren Gegenstand (10) befindet und der mit der periodischen Frequenz für den Musterwechsel im Datenstrom synchronisiert ist, welcher in den einfügbaren Gegenstand (10) eintritt.

7. System gemäß Anspruch 6,
dadurch gekennzeichnet, daß die nützlichen Daten zu Datensätzen in Gruppen zusammengefügt werden, die Begrenzungselemente (START, STOP) umfassen, vor ihrer Verarbeitung durch die Mittel (23, 24) zur Reproduktion und zur MFM- oder GCR-Kodierung, und dadurch, daß die Begrenzungselemente das Einstellen der Synchronisierung der Zugangsschaltungen (13, 43) zum Datenspeicher (12) des einfügbaren Gegenstandes sicherstellen.

8. System gemäß einem der Ansprüche 1 bis 7,
dadurch gekennzeichnet, daß in dem Datenaustauschweg in Richtung (32), die vom einfügbaren Gegenstand (10) zur Übertragungsvorrichtung (20) führt, die Mittel zum Einfügen von Fülldaten über Mittel (45) zum Speichern vorgefertigter Bitfolgen sowie über Mittel (42) zum Übertragen dieser vorgefertigten Folgen in Abhängigkeit der zu übertragenden nützlichen Daten verfügen.

9. System gemäß Anspruch 8,
dadurch gekennzeichnet, daß die vorgefertigten Bitfolgen aus Verarbeitungsschritten zur Reproduktion, zum MFM-Kodieren und/oder zum GCR-Kodieren stammen.

10. System gemäß einem der Ansprüche 8 und 9,
dadurch gekennzeichnet, daß die nützlichen Daten Byte für Byte geliefert werden und dadurch, daß die Mittel zum Einfügen der Fülldaten eine Füllfolge bei jedem Lesen eines neuen Bytes nützlicher Daten in den elektronischen Speicher des einfügbaren Gegenstandes (10) einfügen.

11. Datenaustauschsystem, das mindestens einen elektronischen Gegenstand umfaßt, der eingefügt bzw. entfernt werden kann und mindestens eine Übertragungsvorrichtung umfaßt, wobei

- der einfügbare Gegenstand über einen elektronischen Datenspeicher verfügt, der mit einer Zugangsschaltung verbunden ist sowie Kopplungsmittel enthält, die ein vorübergehendes Koppeln des einfügbaren Gegenstandes mit der Übertragungsvorrichtung ermöglichen,
- die Übertragungsvorrichtung über Mittel zur Datenübertragung in und/oder aus dem Datenspeicher des einfügbaren Gegenstandes verfügt,
- der einfügbare Gegenstand eine magnetische, optische und/oder kapazitive Aufzeichnungsunterstützung gegenüber einem magnetischen Lese- und/oder Schreibkopf der Übertragungsvorrichtung emuliert, wobei die Datenaustauschrate der Übertragungsvorrichtung höher ist, als die der Zugangsschaltung des Datenspeichers des einfügbaren Gegenstandes;

das System ist dadurch gekennzeichnet, daß es über Mittel (22, 40) verfügt, um den Durchsatz nützlicher Daten innerhalb des scheinbaren Durchsatzes von Daten (30) zu begrenzen, welche in die Übertragungsvorrichtung (20) eintreten und/oder diese verlassen, so daß dieser Datendurchsatz mit dem in bzw. aus der Zugangsschaltung (13) zum Datenspeicher (12) des einfügbaren Gegenstandes (10) ein- und/oder austretenden Datendurchsatz kompatibel ist, wobei die Mittel zum Begrenzen des Durchsatzes nützlicher Daten über Mittel verfügen, um Füllinformation in den Datenstrom (30) einzufügen, der in die Übertragungsvorrichtung (20) eintritt und/oder diese verläßt.

12. Einfügbarer Gegenstand, der mit mindestens einer Übertragungsvorrichtung anwendbar ist, wobei

- der einfügbare Gegenstand über einen elektronischen Datenspeicher verfügt, der mit einer Zugangsschaltung verbunden ist sowie Kopplungsmittel enthält, die ein vorübergehendes Koppeln des einfügbaren Gegenstandes mit der Übertragungsvorrichtung ermöglichen,
- die Übertragungsvorrichtung über Mittel zur Datenübertragung in und/oder aus dem Datenspeicher des einfügbaren Gegenstandes verfügt,
- der einfügbare Gegenstand eine magnetische Aufzeichnungsunterstützung gegenüber einem magnetischen Lese- und/oder Schreibkopf der Übertragungsvorrichtung emuliert, wobei die Datenaustauschrate der Übertragungsvorrichtung höher ist, als die der Zugangsschaltung des Datenspeichers des einfügbaren Gegenstandes;

das System ist dadurch gekennzeichnet, daß es über Mittel (40) verfügt, um den Durchsatz nützlicher Daten innerhalb des scheinbaren Durchsatzes von Daten (32), welche den einfügbaren Gegenstand (10) verlassen, zu begrenzen, so daß dieser Datendurchsatz mit dem aus der Zugangsschaltung (13) zum Datenspeicher (12) des einfügbaren Gegenstandes (10) austretenden Datendurchsatz kompatibel ist, wobei die Mittel zum Begrenzen des Durchsatzes nützlicher Daten über Mittel verfügen, um Füllinformation in den Datenstrom (32) einzufügen, der den einfügbaren Gegenstand (10) verläßt.

13. Übertragungsvorrichtung, die mit mindestens einem elektronischen Gegenstand anwendbar ist, der eingefügt bzw. entfernt werden kann, wobei

- der einfügbare Gegenstand über einen elektronischen Datenspeicher verfügt, der mit einer Zugangsschaltung zusammenhängt sowie Kopplungsmittel enthält, die ein vorübergehendes Koppeln des einfügbaren Gegenstandes mit der Übertragungsvorrichtung ermöglichen,
- die Übertragungsvorrichtung über Mittel zur Datenübertragung in und/oder aus dem Datenspeicher des einfügbaren Gegenstandes verfügt,
- der einfügbare Gegenstand eine magnetische Aufzeichnungsunterstützung gegenüber einem magnetischen Lese- und/oder Schreibkopf der Übertragungsvorrichtung emuliert, wobei die Datenaustauschrate der Übertragungsvorrichtung höher ist, als die der Zugangsschaltung des Datenspeichers des einfügbaren Gegenstandes;

das System ist dadurch gekennzeichnet, das es über Mittel (22) verfügt, um den Durchsatz nützlicher Daten innerhalb des scheinbaren Durchsatzes von Daten (31), welche die Übertragungsvorrichtung (20) verlassen, zu begrenzen, so daß dieser mit dem in die Zugangsschaltung (13) zum Datenspeicher (12) des einfügbaren Gegenstandes (10) eintretenden Datendurchsatz kompatibel ist, wobei die Mittel zum Begrenzen des Durchsatzes nützlicher Daten über Mittel verfügen, um Füllinformation in den Datenstrom (31) einzufügen, der die Übertragungsvorrichtung (20) verläßt.

**Claims**

1. System for data exchange comprising at least one movable, insertable electronic object and at least one transfer device,

   - the said insertable object comprising an electronic memory associated with an access circuit and coupling means enabling temporary coupling of the said insertable object to the said transfer device,
   - the said transfer device containing means for data transfer to and/or from the memory of the insertable object,
   - the said insertable object emulating a magnetic recording medium with respect to a magnetic read/write head of the transfer device, the data exchange throughput of the transfer device being higher than that of the access circuit of the memory of the insertable object,

   which system is characterised in that it comprises means (22, 40) for limiting the throughput of useful data in the apparent data throughput (30) entering and/or leaving the transfer device (20) such that said throughput is compatible with the throughput leaving and/or entering the access circuit (13) of the memory (12) of the insertable object (10), the said means for limiting the throughput of useful data comprising means for inserting padding information in the flow of data (30) entering and/or leaving the transfer device (20).

2. System according to Claim 1, characterised in that the said means for inserting the padding information comprise means (23) for redundant coding and/or n-fold replication, $n \geq 2$, of at least some of the said useful data, in the flow of data (30) entering and/or leaving the transfer device (20).

3. System according to Claim 2, characterised in that, in the channel for the exchange of data in the direction (31) going from the said transfer device (20) to the said insertable object (10), the said means (23) for replication of at least some of the useful data cooperate with specific encoding means (24) of the MFM or GCR type, arranged downstream of the said replication means (23), the said replication means and MFM or GCR encoding means (23, 24) being located in the transfer device (20).

4. System according to Claim 3, wherein the combination of the data processing operations by the replication means (23) and then by the MFM or GCR coding means (24) provides, for each bit of useful information, a data sequence within which series of ones and zeros alternate in accordance with a first pattern (51) for a useful bit equal to zero and in accordance with a second pattern (52) for a useful bit equal to one, characterised in that the said insertable object comprises pattern discrimination means (49) ensuring discrimination between the first (51) and the second (52) patterns so as to recover each of the successive useful bits in the flow of data (30) entering the said insertable object.

5. System according to Claim 4, characterised in that the said first and second patterns are predetermined periodic patterns displaying changes in state according to a first periodicity for the first pattern and according to a second periodicity, differing from the first periodicity, for the second pattern, and in that the said pattern discrimination means comprise frequency discrimination means (49).

6. System according to Claim 5, characterised in that the said frequency discrimination means directly feed a serial-to-parallel converter (43) associated with a processor (40), located in the said insertable object (10), synchronised with the frequency of periodic change of pattern in the flow of data entering the said insertable object (10).

7. System according to Claim 6, characterised in that the said useful data are regrouped in data streams containing delimiters (START, STOP) prior to processing by the said replication means and MFM or GCR encoding means (23, 24), and in that the said delimiters ensure the locking of synchronisation of the said access circuits (13, 43) to the memory (12) of the insertable object.

8. System according to any one of Claims 1 to 7, characterised in that, in the channel for the exchange of data in the direction (32) going from the said insertable object (10) to the said transfer device (20), the said means for inserting padding information comprise means (45) for storing pre-prepared bit sequences and means (42) for transmitting the said pre-prepared sequences as a function of useful data to be transmitted.

9. System according to Claim 8, characterised in that the said pre-prepared bit sequences are obtained from replication, MFM encoding and/or GCR encoding processing operations.

10. System according to either of Claims 8 and 9, characterised in that the useful data are fed byte by byte and in that the said means for inserting padding data insert a padding sequence each time a new byte of useful data is read in the electronic memory of the said insertable object (10).

11. System for data exchange comprising at least one movable, insertable electronic object and at least one transfer device,

   - the said insertable object comprising an electronic memory associated with an access circuit and coupling means enabling temporary coupling of the said insertable object to the said transfer device,
   - the said transfer device containing means for data transfer to and/or from the memory of the insertable object,
   - the said insertable object emulating an optical and/or capacitive electromagnetic recording medium with respect to an optical and/or capacitive electromagnetic read/write head of the transfer device, the data exchange throughput of the transfer device being higher than that of the access circuit of the memory of the insertable object,

   which system is characterised in that it comprises means (22, 40) for limiting the throughput of useful data in the apparent data throughput (30) entering and/or leaving the transfer device (20) such that said throughput is compatible with the throughput leaving and/or entering the access circuit (13) of the memory (12) of the insertable object (10), the said means for limiting the throughput of useful data comprising means for inserting padding information in the flow of data (30) entering and/or leaving the transfer device (20).

12. Insertable object usable with at least one transfer device,

   - the said insertable object comprising an electronic memory associated with an access circuit and coupling means enabling temporary coupling of the said insertable object to the said transfer device,
   - the said transfer device containing means for data transfer to and/or from the memory of the insertable object,
   - the said insertable object emulating a magnetic recording medium with respect to a magnetic read/write head of the transfer device, the data exchange throughput of the transfer device being higher than that of the access circuit of the memory of the insertable object,

   characterised in that it comprises means (22, 40) for limiting the throughput of useful data in the apparent data throughput (32) leaving the insertable object (10) such that said throughput is compatible with the throughput leaving the access circuit (13) of the memory (12) of the insertable object (10), the said means for limiting the throughput of useful data comprising means for inserting padding information in the flow of data (32) leaving the insertable object (10).

13. Transfer device usable with at least one movable, insertable electronic object,

   - the said insertable object comprising an electronic memory associated with an access circuit and coupling means enabling temporary coupling of the said insertable object to the said transfer device,
   - the said transfer device containing means for data transfer to and/or from the memory of the insertable object,
   - the said insertable object emulating a magnetic recording medium with respect to a magnetic read/write head of the transfer device, the data exchange throughput of the transfer device being higher than that of the access circuit of the memory of the insertable object,

   characterised in that it comprises means (22) for limiting the throughput of useful data in the apparent data throughput (31) leaving the transfer device (20) such that said throughput is compatible with the throughput entering the access circuit (13) of the memory (12) of the insertable object (10), the said means for limiting the throughput of useful data comprising means for inserting padding information in the flow of data (31) leaving the transfer device (20).

Fig. 1

Fig. 3

Fig. 2

EP 0 511 140 B1